(19) Europäisches Patentamt
European Patent Office
Office européen des brevets

(11) **EP 3 186 300 B2**

(12) **NEUE EUROPÄISCHE PATENTSCHRIFT**
Nach dem Einspruchsverfahren

(45) Veröffentlichungstag und Bekanntmachung des Hinweises auf die Entscheidung über den Einspruch:
**23.10.2024 Patentblatt 2024/43**

(45) Hinweis auf die Patenterteilung:
**01.05.2019 Patentblatt 2019/18**

(21) Anmeldenummer: **15752998.3**

(22) Anmeldetag: **12.08.2015**

(51) Internationale Patentklassifikation (IPC):
**C08J 5/18** *(2006.01)* **C08J 7/12** *(2006.01)*

(52) Gemeinsame Patentklassifikation (CPC):
**C08J 7/123;** C08J 2383/04

(86) Internationale Anmeldenummer:
**PCT/EP2015/068534**

(87) Internationale Veröffentlichungsnummer:
**WO 2016/030183 (03.03.2016 Gazette 2016/09)**

(54) **OBERFLÄCHENMODIFIZIERTES SILIKON UND VERFAHREN ZU DESSEN HERSTELLUNG**

SURFACE-MODIFIED SILICONE AND METHOD FOR PRODUCING SAME

SILICONE MODIFIÉ EN SURFACE, ET PROCÉDÉ POUR SA PRODUCTION

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **26.08.2014 DE 102014217000**

(43) Veröffentlichungstag der Anmeldung:
**05.07.2017 Patentblatt 2017/27**

(73) Patentinhaber: **Fraunhofer-Gesellschaft zur Förderung der angewandten Forschung e.V.**
**80686 München (DE)**

(72) Erfinder:
• **DÖLLE, Christopher**
**27749 Delmenhorst (DE)**
• **SCHILINSKY, Laura**
**28203 Bremen (DE)**
• **WILKEN, Ralph**
**26180 Rastede (DE)**
• **SCHMÜSER, Christoph**
**26188 Edewecht (DE)**
• **VISSING, Klaus-Dieter**
**27321 Thedinghausen (Morsum) (DE)**

(74) Vertreter: **Eisenführ Speiser Patentanwälte Rechtsanwälte PartGmbB**
**Postfach 10 60 78**
**28060 Bremen (DE)**

(56) Entgegenhaltungen:
WO-A1-99/57177          WO-A2-2008/002805
DE-A1- 102009 019 745   US-A1- 2006 138 686

EP 3 186 300 B2

**Beschreibung**

Die vorliegende Erfindung betrifft ein Verfahren zur Herstellung eines Silikons mit strahlungserzeugter Oberflächenmodifikation.

Silikon wird in einer Vielzahl von technischen Anwendungen als Oberflächenmaterial eingesetzt. Grund hierfür sind seine hervorragenden mechanischen Eigenschaften, seine Beständigkeit gegenüber Temperaturschwankungen, UV-Strahlung, Chemikalien oder wässrigen Medien. Beispiele finden sich in der Automobilproduktion, in der Mikroelektronik, in der Medizin oder aber auch im alltäglichen Leben, als Backform, Schnuller, Erotikprodukt usw.

Allerdings besitzt Silikon - neben den gewünschten Vorteilen - eine Reihe von Nachteilen oder Oberflächeneigenschaften, bei denen ein Bedarf an Verbesserung besteht.

Silikonoberflächen besitzen eine hohe Tackigkeit und Klebrigkeit. In Folge werden die haptischen Eigenschaften als nicht ideal empfunden, Silikonoberflächen bauen zu in engem Kontakt liegenden Oberflächen eine hohe Haftung auf, sie sind staubempfindlich und schwer zu reinigen. Die inerte Oberfläche des Silikons erschwert zudem das Kleben oder Beschichten der Silikonbauteile.

Im Stand der Technik sind zur Verbesserung unerwünschter Silikon(gummi)eigenschaften Funktionsbeschichtungen bekannt, welche Silikone als Bestandteile umfassen und deren Eigenschaftsprofil, vor allem die niedrige Oberflächenenergie, zur Erzeugung von Oberflächenfunktionen ausnutzen. So beschreibt beispielsweise die DE112012001495T5 Zusammensetzungen, welche eine langlebige hydrophobe Beschichtung mit selbstreinigenden, wasser- und schmutzabweisenden Eigenschaften bereitstellen.

Die Wacker Chemie AG, München, bietet neuartige Festsiliconkautschuke mit einer stark reibungsverminderten Oberfläche an (Reihe Elastosil R plus 4366, Typenreihe Elastosil R plus 4066, Siliconprodukt Silpuran 8630/60). Der reibungsvermindernde Effekt wird durch ein besonderes Rezepturkonzept erreicht, das die Nachteile der klassischen ölausschwitzenden Silicone vermeidet.

Das Unternehmen LEONI AG, Nürnberg, verwendet ein spezielles Extrusionsverfahren, welches die Herstellung von geschmeidigen Silikonoberflächen mit einem dauerhaft verbesserten Haftgleitverhalten, ohne Stick-Slip-Effekt (d.h. ruckartiges Gleiten) und mit angenehmer Haptik erlaubt (Leonie Medienmitteilung 2. Dez. 2013).

Fluor Technik System GmbH, Lauterbach, bietet Lösungen für Silikone, Fluor-Silikone, Kautschuke und thermoplastische Elastomere zur Haptikoptimierung, Reibungsoptimierung oder zur Reduzierung der Anschmutzung an (DE102009058910A1, DE102009005239A1). Erzielt werden die Eigenschaften durch eine intensive Fluorierung, wodurch Fluoratome in die Oberfläche eingelagert werden.

Das Unternehmen Silcos GmbH, Reutlingen, bietet die Funktionsbeschichtung von Silikonen mittels Bedruckens oder Lackierens an. Eine Bedruckung mit einem Tintenstrahldrucker ist zum Beispiel nach Aktivierung und Erwärmung der Oberfläche möglich (DE102008026719A1). Eine Lackierung beschreibt die so genannte "Silmade-Low-Friction-Beschichtung". Diese stellt ein Verfahren zur Veredlung von Silikon mit einer auf Polyurethan basierenden Beschichtungen dar. Die applizierte Oberfläche mit hoher Elastizität ist gut zu reinigen, sehr abriebfest und resistent gegen Staub und Schmutzpartikel. Weiterhin bietet Silcos eine Metallisierung mittels eines PVD (Physical Vapor Deposition) -Plasmaverfahrens an. Zudem sind Oberflächenmodifikationen durch zusätzliche funktionelle Schichten, z.B. Anti-Statik-Schichten, reibungsreduzierende Schichten oder Sperr- bzw. Barriereschichten bekannt. Zur Oberflächenbeschichtung werden u.a. schichtbildende Plasmen unter Einsatz von vinylhaltigen Monomerverbindungen eingesetzt (DE102005041330B4).

Bekannt ist weiterhin, dass durch eine nicht-schichtbildende Niederdruckplasmabehandlung, die Sauerstoff oder Ammoniak als Prozessgase verwendet, zwar Silikone mit hydrophilen Oberflächeneigenschaften erzeugt werden können, dieser Effekt aber nicht über einen längeren Zeitraum stabil ist (z.B. DE000010256483A1). Als Ursache wird die Migration kurzkettiger Bestanteile angesehen, welche innerhalb kurzer Zeit an die aktivierte Oberfläche wandern (z.B. hydrophobic recovery effect M. Morra, E. Occhiello, R. Marola, F. Garbassi, P. Humphrey, D. Johnson: J. Coll. Interface Sci. 137 (1990), pp. 11-24).

DE102009046947A1 beschreibt ein Niederdruck-Plasmaverfahren, mit dem Elastomere mit Funktionsbeschichtungen zur Verringerung der Reibung oder zur Verbesserung der Haptik mit einer stickstoffhaltigen Funktionsbeschichtung versehen werden.

Bekannt ist ferner, dass Silikone sich durch Bestrahlung mit Licht (200 nm (VUV-Spektralbereich, Vakuum-Ultraviolett) zu einem siliziumanorganischen $SiO_x$-Material umwandeln lassen. Oberflächennah wird eine dünne anorganische $SiO_x$-Schicht erzeugt (Schnyder, B., Lippert, T., Kötz, R., Wokaun, A., Graubner, V.-M., Nuyken, O., Surface Science 2003, 532-535, 1067 ; Mirley, C. L., Koberstein, J. T., Langmuir 1995, 11, 1049 ). Hintergrund ist, dass die VUV-Strahlung derart energiereich ist, dass mit ihr sämtliche Bindungen in der Silikonpolymerschicht aufgebrochen werden können. In der Literatur existieren zahlreiche Arbeiten zwecks Aufklärung des Mechanismus (z.B. Awazu, K., Onuki, H., Appl. Phys. Lett. 1996, 69, 482 ; Berdichevsky, Y., Khandurina, J., Guttman, A., Loa, Y.-A., Sensors and Actuators 2004, 97, 402 ; Graubner, V.-M., Dissertation, München, Deutschland 2004 ; Ichikawa, S., J. Appl. Phys. 2006, 100, 33510). Für die Reaktionsmöglichkeiten wurden verschiedene radikalische Mechanismen formuliert, mit unterschiedlichen Startreaktionen (Abspaltung eines Wasserstoffatoms von einer Methylgruppe, Bindungsbruch in der Hauptkette), unterschiedlichen Zwischenprodukten (Methylenradikal, Peroxyradikal, Silylradikal, Hydroxylradikal) und Abspaltungsprodukten (Methan, Methanol, $CO_2$, Formaldehyd). Der Reaktionsmechanismus variiert mit den gewählten Bedingungen und ist nicht restlos aufgeklärt.

Nach VUV-Bestrahlung besitzt die siliziumanorganische Schicht eine stark erhöhte Oberflächenenergie und ist deutlich hydrophiler. Beispielsweise Awazu, K., Onuki, H., Appl. Phys. Lett. 1996, 69, 482 ; Berdichevsky, Y., Khandurina, J., Guttman, A., Loa, Y.-A., Sensors and Actuators 2004, 97 sinkt in der Wasserkontaktwinkel durch eine VUV-Behandlung von über 100° auf unter 10°. Eine derartige VUV-Vorbehandlung kann zur Klebvorbehandlung eingesetzt werden.

Die VUV-Behandlung generiert nachweislich oberflächliche Silanolgruppen (Dölle, C., Papmayer, M., Ott, M., Vissing, K., Langmuir 2009, 25, 7129 .; Graubner, V. M., Clemens, D., Langmuir 2005, 21, 8940; Graubner, V.-M., Jordan, R., Nuyken, O., Macromolecules 2004, 37, 5936), die für eine bessere Benetzbarkeit und insbesondere als Reaktionsanker für eine Klebstoffoptimierung zur Verfügung stehen.

Die DE102007020655A1 beschreibt ein Beschichtungsverfahren und eine entsprechende Beschichtung unter Verwendung von VUV-Strahlung und silikonartigen Ausgangssubstanzen, z.B. PDMS. Diese werden in einem ersten Schritt auf einen Körper als flüssige Dünnschicht aufgebracht und im zweiten Schritt unter dem Einfluss der VUV-Strahlung zu einer Funktionsschicht ausgehärtet.

In der Anmeldung WO002012013364A1 ist ein Verfahren zur kratz- und abrasionsbeständigen Beschichtung und zur physikalischen Mattierung beschrieben. Es verwendet einen nanopartikel-haltigen Klarlack, welche unter Einwirkung von Licht der Wellenlänge 172 nm vorvernetzt wird. Durch die Bestrahlung entstehen Mikrofaltungen in der Lackoberfläche, wodurch die Haptik beeinflusst werden kann.

Die Anmeldung DE102009019745A1 beschreibt ein Verfahren, bei dem ein Silikon mit Licht des Spektralbereichs 10 bis 400 nm zur Belichtung bestrahlt wird. Anschließend erfolgt das Herauslösen der belichteten Bereiche mithilfe eines Entwicklers. Als Ergebnis entsteht eine strukturierte Silikonoberfläche, welche als Funktionsschicht genutzt werden kann.

Zusammenfassend zeigt sich, dass es nach dem Stand der Technik verschiedene Ansätze gibt einerseits mithilfe von Beschichtungen auf Silikonbasis Oberflächeneigenschaften zu erzeugen und andererseits verschiedene Ansätze existieren, Silikonoberflächen selbst mit Funktionsoberflächen auszurüsten, um die Haptik, die Gleitreibungseigenschaften, die Reinigungseigenschaften oder die Oberflächenenergie zu beeinflussen. Die Ansätze umfassen a) Möglichkeiten, das Silikonausgangsmaterial selbst zu modifizieren, b) Verfahren, die eine Vorbehandlung des Silikons mit Fluor oder mithilfe eines Plasmas vorsehen und c) den Bereich der Beschichtungen, vor allem mittels Plasmaprozessen. Zur Plasmabehandlung bzw. -beschichtung kommen Niederdruckverfahren zum Einsatz.

Ausgehend vom Stand der Technik war es daher Aufgabe der vorliegenden Erfindung, ein Verfahren zur Herstellung eines Silikons anzugeben, das ohne eine zusätzliche Beschichtung erforderlich zu machen eine Vielzahl der positiven Eigenschaften von Silikon aufweist, gegenüber unverändertem Silikon aber über verbesserte Oberflächeneigenschaften verfügt. Bevorzugte verbesserte Oberflächeneigenschaften sind hierbei die Reduzierung von Schmutzanhaftung, ein reduzierter Oberflächentack, eine Haptikoptimierung (insbesondere gegenüber menschlicher Haut), eine Reibreduzierung gegenüber einer Vielzahl von Oberflächen, eine verbesserte Klebbarkeit und/oder eine erhöhte Härte.

Diese Aufgabe wird gelöst durch ein Verfahren zur Herstellung eines Silikons mit strahlungserzeugter Oberflächenmodifikation, wobei die Oberflächenmodifikation ein Bereich mit gegenüber dem unmodifizierten Silikon veränderter stofflicher Zusammensetzung ist und zumindest nach 20% unidirektionaler Dehnung über eine Rissstruktur mit Rissen einer Tiefe von 2- 30 $\mu$m und besonders bevorzugt 2- 15 $\mu$m verfügt.

Ein Silikon ist ein Poly(organo)siloxan, bei dem Siliziumatome über Sauerstoffatome verknüpft sind. Ein Silikon im Sinne dieser Erfindung kann dabei unvernetzt vorliegen (Kautschuk), teilvernetzt oder vollständig vernetzt. Teilvernetzt bedeutet, dass bevorzugt im Rahmen einer Vulkanisierungsreaktion eine weitere Vernetzung bis zur vollständigen Vernetzung (voll vernetzt) erfolgen kann. Die Molekülketten sind bevorzugt wenigstens teilvernetzt. Die restlichen freien Valenzelektronen des Siliziums sind dabei abgesättigt durch Kohlenwasserstoffreste, Wasserstoff oder durch funktionelle Gruppen, die Heteroatome sind oder enthalten. Erfindungsgemäß werden Silikone bevorzugt ausgewählt aus der Gruppe bestehend aus Silikongummi, Silikonharz und Floursilikon, wobei Silikongummi besonders bevorzugt sind und Silikonöle nicht umfasst sind. Ein Silikon im Sinne dieses Textes kann übliche Zusätze wie z.B. Additive oder Füllmittel umfassen und hat eine Härte von $\geq$ shore 3, klassifiziert nach shore A-Prüfung. Sofern das Silikon zu hart ist, um mittels shore A-Prüfung klassifiziert zu werden, kann alternativ eine Einordnung nach shore D erfolgen. Die shore A Härte und shore D Härte wird gemessen nach DIN ISO 7619-1:2010.

Ein Silikongummi im Sinne des vorliegenden Textes enthält bevorzugt silikatische Füllstoffe, besonders bevorzugt pyrogene Kieselsäure.

Ein bevorzugt herzustellendes Silikongummi im Sinne der vorliegenden Erfindung enthält 20 Gew.-% bis 40 Gew.-%, bevorzugt 22 bis 38 Gew.-%, Füllstoffe, bezogen auf die Gesamtmasse der Silikonformulierung.

Ein Silikonharz ist kein Elastomer, wobei dies bedeutet, dass die Reißdehnung des Materials ☐ 100 % ist.

Silikonharze enthalten typischerweise keine pyrogene Kieselsäure als Füllstoff. In vollständig vernetzter Form verfügen "Silikonharze" im Sinne dieses Textes bevorzugt über eine shore D "Härte" von 20-50 gemessen nach DIN ISO 7619-1:2010.

Ein Fluorsilikon ist ein Silikon, bei dem Kohlenwasserstoffgruppen durch Fluoralkylgruppen ersetzt sind.

Eine "strahlungserzeugte Oberflächenmodifikation" eines Silikons ist im Sinne dieser Erfindung eine strukturelle Veränderung (z.B. Risse nach Dehnung) und/oder eine Veränderung der stofflichen Zusammensetzung gegenüber dem unmodifizierten Silikon, wobei die Modifikation mittels Strahlung erzeugbar ist.

Bevorzugt ist, dass die Modifikation mittels Licht einer Wellenlänge von $\leq 225$ nm erzeugbar ist, wobei besonders bevorzugt die Bestrahlungsdosis der Strahlung des genannten Wellenlängenbereiches 10 J/cm$^2$ bis 50 J/cm$^2$ beträgt.

Ebenfalls oder zusätzlich bevorzugt ist, dass die Modifikation mittels Strahlung (Licht) einer Wellenlänge von $\geq 100$ nm, weiter bevorzugt $\geq 150$ nm erzeugt wird. Für die Berechnung der Bestrahlungsdosis ist bevorzugt, dass Strahlung unter 100 nm nicht in die Berechnung eingeht, weiter bevorzugt geht Strahlung von unter 150 nm nicht in die Berechnung ein. Insbesondere im Falle von Plasmastrahlung ist für die Bestrahlungsdosisberechnung die Wellenlängenuntergrenze der zu berücksichtigenden Strahlung 150 nm.

Eine "Rissstruktur" im Sinne der vorliegenden Erfindung ist ein System von einer Vielzahl von Rissen, wobei bevorzugt $\geq 1,5$ Risse pro mm, weiter bevorzugt $\geq 2$ Risse pro mm und besonders bevorzugt $\geq 3$ Risse pro mm, gemessen entlang einer Messstrecke auf der Oberfläche des modifizierten Silikons bevorzugt parallel zur Dehnungsrichtung, vorliegen.

Die Tiefe der Rissstrukturen bzw. der Risse wird bevorzugt im Querschnitt mittels Lichtmikroskopie bestimmt.

Die Herstellung modifizierten Silikons kann ohne großen Aufwand z.B. durch Bestrahlung mit hochenergetischer Strahlung ($\leq 249$ nm) erzeugt werden. Genauere Ausführungen hierzu finden sich auch weiter unten in diesem Text. Die Bestrahlung, die zu dem erfindungsgemäß herzustellenden Silikon führt, kann dabei auch unter Atmosphärendruck und bevorzugt auch bei normaler Atmosphärenzusammensetzung durchgeführt werden. Somit sind die entsprechenden Silikone verhältnismäßig leicht zugänglich.

Überraschenderweise hat sich herausgestellt, dass die erfindungsgemäßen Silikone gegenüber dem ursprünglichen Silikon über eine verbesserte Haptik (die Oberfläche fühlt sich anschließend weniger stumpf an) und/oder über reduzierte Haft- und Gleitreibung verfügen (gegenüber einem gleichen Oberflächenmaterial). Ferner können die Silikone über eine Mattierung gegenüber dem unveränderten Silikon verfügen und/oder gegenüber einer Staubanhaftung weniger anfällig sein.

Weiterhin kann eine Reduzierung des Oberflächentacks erzielt werden, eine Kaltverschweißung zweier in Kontakt befindlicher Silikonoberflächen vermieden werden, die Oberflächenreinigung wird vereinfacht (easy-to-clean), gleichzeitig wird die Klebbarkeit der Oberfläche erhöht, Knartzgeräusches werden vermindert es kann oder eine Veränderung des optischen Brechungsindexes des Silikons herbeigeführt werden.

Sofern es in diesem Text um die strahlungserzeugte Modifikation geht, betrifft dies eine Modifikation des ursprünglichen Silikons. Dieses Silikon ist dabei unterhalb der Modifikationsschicht im Silikon stets vorhanden, so dass auch die Veränderung der stofflichen Zusammensetzung) gegenüber diesem Silikon stets feststellbar ist. Dabei beginnt das (nichtmodifizierte) Silikon bevorzugt in dem Bereich, in dem sich weder Risse noch eine stoffliche Veränderung (bevorzugt mittels Flugzeit-Sekundärionenmassenspektrometrie ToF-SIMS, Time-of-Flight Secondary Ion Mass Spectrometry) feststellen lassen.

Bevorzugt ist ein Silikon, welches an der Oberfläche der Oberflächenmodifikation einen gegenüber dem unmodifizierten Silikon um $\geq 10\%$ erhöhten O-Gehalt (Stoffmengenkonzentration) bezogen auf die Stoffmengenkonzentration des O im unmodifizierten Silikon und/oder einen um $\geq 10\%$ verringerter C-Gehalt (Stoffmengenkonzentration) bezogen auf die Stoffmengenkonzentration des C im unmodifizierten Silikon aufweist, jeweils gemessen mittels Röntgenphotoelektronenspektroskopie (XPS, X-ray Photoelectron Spectroscopy).

Bevorzugt besitzt das Silikon an der Oberfläche der Oberflächenmodifikation einen gegenüber dem unmodifizierten Silikon um $\geq 20\%$, bevorzugt $\geq 35\%$, weiter bevorzugt $\geq 50\%$ und besonders bevorzugt $\geq 60\%$ erhöhten O-Gehalt bezogen auf die Stoffmengenkonzentration des O im unmodifizierten Silikon und/oder einen um $\geq 20\%$, bevorzugt $\geq 35\%$, weiter bevorzugt $\geq 50\%$ und besonders bevorzugt $\geq 80\%$ verringerten C-Gehalt bezogen auf die Stoffmengenkonzentration des C im unmodifizierten Silikon, jeweils gemessen mittels XPS.

Bevorzugt ist ein Silikon, welches zusätzlich oder alternativ an der Oberfläche der Oberflächenmodifikation einen gegenüber dem unmodifizierten Silikon um $\geq 5$ Atom-%, bevorzugt $\geq 10$ Atom-%, besonders bevorzugt $\geq 15$ Atom-% erhöhten O-Gehalt und/oder einen um $\geq 5$ Atom-%, bevorzugt $\geq 10$ Atom-%, besonders bevorzugt $\geq 15$ Atom-% verringerten C-Gehalt umfasst, jeweils bezogen auf die Summe der Atomprozente von F, N, Si, C und O gemessen mittels XPS.

Die genannten bevorzugten und weiter bevorzugten Silikone zeigen dabei hier besonders brauchbare Eigenschaftsfenster.

Es hat sich gezeigt, dass die erfindungsgemäße Strahlungsmodifikation der Silikonoberfläche zumindest in den bevorzugten Fällen zu einer Erhöhung des Sauerstoffgehaltes und zu einer Verringerung des Kohlenstoffgehaltes führt.

Bevorzugt ist ein Silikon, wobei der Oxidationszustand des Silikons ausgehend von der Oberfläche bis zu einer Tiefe ≥ 200 nm, bevorzugt ≥ 500 nm, weiter bevorzugt ≥ 1000 nm abnimmt.

Bevorzugt ist ein Silikon, wobei der Oxidationszustand des strahlungsmodifizierten Bereiches in einer Tiefe von 200 nm um mindestens 10% gegenüber dem Oxidationszustand des unmodifizierten Volumenmaterials erhöht ist.

Der Oxidationszustand kann hierbei dokumentiert werden über die Messung des Zählratenverhältnis O/C mittels ToF-SIMS-Elementtiefenprofilierung oder über die Messung des Elementverhältnis O/C per hochauflösender Rasterelektronemikroskopie mit energiedispersiver Röntgenmikroanalyse (HREM-EDX) oder Röntgenphotoelektronenspektroskopie (XPS). Im Zweifelsfall sind die ToF-SIMS-Messungen analog zum Beispiel 6 durchzuführen.

Der Fachmann hat bei der Interpretation der Ergebnisse messbedingte Messfehler, das Signal-Rausch Verhältnis sowie offensichtliche Anomalien des Materials und das Vorhandensein von Additiven zu berücksichtigen. Im Zweifelsfall bevorzugt ist im Sinne dieses Textes eine Messung mittels ToF-SIMS.

Bevorzugt ist ein Silikon, wobei an der Oberfläche der Oberflächenmodifikation ein gegenüber dem unmodifizierten Silikon um ≥ 20% erhöhtes Stoffmengenverhältnis O : C gemessen mittels XPS besteht.

Ebenfalls oder zusätzlich bevorzugt ist ein Silikon, wobei an der Oberfläche der Oberflächenmodifikation gegenüber dem unmodifizierten Silikon bei einer Kontakttiefe von 100 nm eine um mindestens 300% erhöhte Härte und/oder ein um mindestens 50% erhöhtes E-Modul mittels Nanoindentierung gemessen werden kann.

Die Nanoindentierung ist eine Prüftechnik, mit der über eine feine Diamantspitze (dreiseitige Pyramide [Berkovich], Radius wenige 100 nm) die Härte von Oberflächenbeschichtungen ermittelt werden kann. Es wird hierbei entgegen der makroskopischen Härtebestimmung (wie z.B. Vickershärte) nicht die durch eine Normalkraft eingeprägte verbliebene Indentierungsmulde vermessen, sondern eine eindringtiefenabhängige Querschnittsfläche des Nanoindentors angenommen. Diese tiefenabhängige Querschnittsfläche wird über eine Referenzprobe mit bekannter Härte ermittelt (i.d.R. Fused Silica).

Die Nanoindentierung verwendet während der Aufbringung der Normalkraft eine empfindliche Auslenkungssensorik (kapazitive Platten), mit der die Eindringtiefe bei steigender und wieder sinkender Normalkraft präzise gemessen werden kann -anders als bei der klassischen Vorgehensweise. Die Normalkraft-Eindringtiefe-Kurve gibt während der Anfangsphase der Entlastung in situ die Steifigkeit der Probe an. Mithilfe der von der Referenzprobe bekannten Querschnittsfläche des Nanoindentors kann so das Elastizitätsmodul und die Härte der Probe bestimmt werden. Die maximale Prüfkraft für die Nanoindentierung liegt in der Regel unterhalb von 15 mN.

Zur Messung der reinen Eigenschaften der Beschichtung ohne Beeinflussung durch das Substrat wird eine Faustregel von 10% der Schichtdicke verwendet. Tiefer gehendere Eindringkurven beinhalten einen Einfluss durch das verwendete Substrat. Bei steigenden Eindringtiefen von über 10% der Schichtdicke nähern sich die gemessenen Werte für Elastizitätsmodul und Härte sukzessive an die des Substrats an. Die beschriebene Auswertung nach diesem Messverfahren wird nach Oliver & Pharr benannt [ W.C. Oliver, G.M. Pharr, An improved technique for determining hardness and elastic modulus using load and displacement sensing indentation experiments, J. Material Res. (1992) Vol. 7, No. 6, 1564-1583].

Zur einfacheren Variation der Eindringtiefen bei verschiedenen Lasten wird das sogenannte multiple Be- und Entlastungsverfahren, kurz Multiindentierungsverfahren, verwendet. Hierbei werden auf einer festen Stelle segmentweise Be- und Entlastungen vorgenommen. Die lokalen Belastungsmaxima werden dabei kontinuierlich gesteigert. Auf der festen Stelle können so tiefenabhängige Werte des Elastizitätsmoduls und der Härte ermittelt werden. Zusätzlich werden aus statistischen Zwecken auf einem Messfeld verschiedene unbeeinflusste Stellen der Probe ebenfalls angefahren und getestet. Durch Vergleich zwischen Einzelindentierung und Multiindentierungsverfahren haben Schiffmann & Küster nachgewiesen, dass es nur sehr kleine Abweichungen zwischen den ermittelten Werten der beiden Verfahren gibt [ K. I. Schiffmann, R. L.A. Küster; Comparison of Hardness and Young's Modulus by Single Indentation and Multiple Unloading Indentation. In: Zeitschrift für Metallkunde 95 (2004) 5, 311-316]. Zur Kompensation werden längere Haltezeiten zur Verhinderung von Kriecheffekten der Piezoscanner vorgeschlagen [ K. I. Schiffmann, R. L.A. Küster; Comparison of Hardness and Young's Modulus by Single Indentation and Multiple Unloading Indentation. In: Zeitschrift für Metallkunde 95 (2004) 5, 311-316].

Bei Materialien mit Gradient im Elastizitätsmodul resp. der Härte wurde unabhängig von der Faustregel zur maximalen Eindringtiefe (max. 10% Eindringtiefe der Beschichtungsdicke) eine starke Abnahme der Härtewerte in Nanoindentierungsversuchen festgestellt und mit entsprechender Kontakttheorie belegt [ K. W. McElhaney, J. J. Vlassak, W. D. Nix, Determination of indenter tip geometry and indentation contact area of depth-sensing indentation experiments, J. Mater. Res. 13 (1998), 1300-1306 ; W. D. Nix, H. Gao, Indentation on size effects in crystalline materials: a law for strain gradient plasticity, J. Mech. Phys. Solids, 46 (1998), 411-425; X.-L. Gao, An expanding cavity model incorporating strain-hardening and indentation size effects, International Journal of Solids and Structures 43 (2006), 6615-6629]. Die Eindringtiefen abhängigen Härte- resp. Elastizitätsmodulwerte fallen dabei von der harten Oberfläche in steigende Tiefe der Proben ab.

Für die Nanoindentierungen wird ein Universal Material Tester (UMT) mit Nanoindentierungsmodul Nano-Head (NH2) der Fa. CETR (nunmehr unter Fa. Bruker AXS S.A.S.) mit entsprechender Vibrationsdämpfungstechnik (Minus k) in einer thermisch und akustischen Isolierungskammer eingesetzt.

Die Kraftrate zur Be- sowie zur Entlastung beträgt 0,07 mN/s. Die lokalen Kraftmaxima der Multiindents werden für 10 s konstant gehalten, um Kriecheffekte des Silikonsubstrates abklingen zu lassen. Die lokalen Kraftmaxima werden danach jeweils auf 20% der Kraft reduziert. Diese Entlastungskurven werden in der Form einer Tangente von 70 bis 40% ausgewertet. Es werden 10 Messpunkte für die Statistik und Homogenität getestet. Die Entfernung der Messpunkte beträgt 50 µm, um Einflüsse wie beispielsweise plastische Deformationen der zu prüfenden Schicht durch vorherige Messungen zu vermeiden. Zur korrekten Handhabung der Annäherungsautomatik ist ggf. bei Nutzung des vorliegenden Messaufbaus eine probenabhängige Korrektur des Stelltriebes in der Entfernung zur Probe notwendig. Diese Korrektur beträgt zwischen 0 und 23 µm. Der Messkopf wird dazu per Skript um die entsprechende Größe weiter von der Probe entfernt, um eine ordentliche Annäherung zu ermöglichen. In der Annäherung zeigt sich ansonsten ein nicht-lineares Verhalten der Federn im Kraftsensor und damit eine Abweichung vom Hook'schen Gesetz.

Für die Einhaltung der Faustformel für die Eindringtiefe von max. 10% der Schichtdicke sind die Entlastungskurven bei den Multiindents des gezeigten Beispiels bis zur maximalen Kraft von 0,055 mN zulässig für die Auswertung. Bei geringeren Schichtdicken ist auf die zugehörige max. lokale Kraft zu achten, um die 10% - Regel nicht zu überschreiten.

Die maximale Kraft für die Eindringtiefe und die korrespondierende Entlastungskurve ist also hier im Zweifelsfall ≤ 0,6 mN, bei Schichtdicken von ≤ 2000 nm ist sie im Zweifelsfall ≤ 0,055 mN bevorzugt.

Zur besseren Vergleichbarkeit werden die Messungen bei einer Kontakttiefe (Eindringtiefe) von 100 nm ausgewertet. Dabei kann eine übliche Ungenauigkeit der Eindringtiefe von ± 10 nm unberücksichtigt bleiben.

Bevorzugt im Sinne der Erfindung ist ein Verfahren zur Herstellung eines Silikons, wobei an der Oberfläche der Oberflächenmodifikation bei einer Kontakttiefe von 100 nm eine Härte von 20 - 1000 MPa und/oder ein E-Modul von 100 - 2000 MPa mittels Nanoindentierung gemessen werden kann.

Zur Nanoindentierung gilt das oben Gesagte hierbei analog.

Ebenfalls bevorzugt oder zusätzlich bevorzugt ist ein Silikon, wobei an der Oberfläche der Oberflächenmodifikation im rissfreien Bereich eine gemittelte Rautiefe RZ ≤ 0,05 µm besteht.

Ein solches Silikon zeichnet sich durch eine angenehme Haptik und durch positive Oberflächeneigenschaften aus.

Im Zweifelsfall wird die gemittelte Rautiefe Rz gemessen, wie in dem entsprechenden Beispiel (siehe unten) beschrieben.

Bevorzugt ist ein Silikon, wobei an der Oberfläche der Oberflächenmodifikation ein gegenüber dem unmodifizierten Silikon um ≥ 10% verringerter Reibkoeffizient besteht und/oder wobei an der Oberfläche der Oberflächenmodifikation ein Reibkoeffizient von 0,1 bis 1,4 besteht.

Dieses bevorzugte Silikon verfügt über hervorragende Reibeigenschaften. Im Zweifelsfall erfolgt die Messung der Reibkoeffizienten wie in dem unten aufgeführten Beispiel beschrieben.

Einsatzbeispiele für die Silikone sind:

- Reduzierung der Schmutzanhaftung für silikonisierte Planen für LKW, Überdachungen, Schirme oder Werbebanner

- Haptikoptimierung für Silikonschutzhüllen, Erotikartikel aus Silikon, Schutzmasken (Gasmasken), Bedienungselemente (Taster, Schalter), silikonisierte Parfumflaschen, Spielzeug, In-Ear-Kopfhörer, Spielecontroller, allg. Silikongebrauchsoberflächen unter häufigem Berührungskontakt, wobei gegebenenfalls erfindungsgemäß Armbänder ausgenommen sein können.

- Reibungsreduzierung für medizinische Schläuche zum Beispiel für Koloskope oder Endoskope

- Gleitreibungsoptimierung für Hülsen oder Stecker, Stopfen, Dichtungsmaterialen (O-Ring) oder Verbindungselementen

- Reibungsreduzierung für Ultraschall-, EKG- oder Instrumentenkabel, Endoskopie-Ventile oder Spritzenkolben

- Reduzierung der Schmutzanhaftung für Silikonbauteile oder silikonisierte Oberflächen im Fahrzeuginnen- und -außenbereich (Regensensor, Blenden, Ablagen, Schaltmatten und -folien, Scheibenwischer)

- Reduzierung der Schmutzanhaftung für Haushaltsgegenstände (Schnuller, Taster (Fernbedienung) oder Schalter, Armbänder, Sportprodukte), insbesondere im Küchenbereich (Backformen, Backmatten, Schaber, Griffe usw.)

- Reduzierung der Schmutzanhaftung für Silikonummantelungen, Silicon case und Schutzhüllen (Handy, Tablet, Tastatur, Fotoapparat)

- Reduzierung des Knarzen für Dichtungsprofile oder flexiblen Übergangsmodulen

- Reduzierung der Schmutzanhaftung für Dämpfungselemente

- Reduzierung der Schmutzanhaftung zwecks Hygieneverbesserung Klebe-BHs, Erotikartikel, medizinische Produkte

- Silikonmembranen

- Medizinische Implantate, optische Linsen

Die Erfindung ist ein Verfahren zum Herstellen eines Silikons, wie im Anspruch beschrieben:

Mittels dieses erfindungsgemäßen Verfahrens können Silikone besonders geeignet hergestellt werden. Dabei ist der Einsatz von Niederdruckquecksilberlampen oder Excimerlampen für das erfindungsgemäße Verfahren bevorzugt.

Im erfindungsgemäßen Verfahren kann auf zusätzliche schichtbildende Ausgangsstoffe (insbesondere auch auf gesundheits- oder umweltgefährdende Ausgangsstoffe) verzichtet werden. Ein Ausgasen des Silikons, das im Niederdruckverfahren zu berücksichtigen wäre, ist für den Prozess dann nicht relevant, wenn er bei Atmosphärendruck durchgeführt wird, was bevorzugt ist.

Zudem kann aufgrund der hohen Eindringtiefe der VUV- bzw. der erfindungsgemäß zu verwendenden UV-Strahlung in das Silikon von bis zu mehreren Mikrometern im Gegensatz zu Plasmaverfahren eine höhere Funktionszeitstabilität erreicht werden. Weiterhin ist somit auch der vertikale Eigenschaftsgradient zwischen behandelter Oberfläche und unverändertem Volumen im Vergleich zu Plasmaprozessen kleiner. Die modifizierte Oberflächenschicht dient als Funktionsträger, während die Bulkeigenschaften des Silikons erhalten bleiben.

Über eine VUV- bzw. UV-Bestrahlung darstellbar sind beispielsweise eine Haptik-Beeinflussung, eine Reduzierung des Oberflächentacks bzw. der -klebrigkeit, eine Reduzierung der Staubanhaftung, eine Reduzierung einer Schmutzanfälligkeit und -anhaftung, eine Erzeugung einer leicht zu reinigenden Oberfläche, eine Beeinflussung des Haft- bzw. Gleitreibungseigenschaften, eine Oberflächenglättung oder -aufrauhung, eine verbesserte Klebbarkeit, eine optische Mattierung, eine Reduzierung des Knartzgeräusches oder eine Veränderung des optischen Brechungsindexes.

Die VUV- bzw. UV-Bestrahlung ist geeignet für Silikonbauteile, Silikonanbauteile, Silikonoberflächen und silikonisierte Oberflächen. Die Behandlung kann vollflächig oder partiell erfolgen.

Bevorzugt findet die VUV- bzw. UV-Bestrahlung an ebenem Material wie zum Beispiel Bahnware oder ebenen Bauteilstrukturen statt.

Im Sinne dieses Textes wird bevorzugt für die Bestimmung der Bestrahlungsenergiedichte bzw. Bestrahlungsdosis E (Strahlungsdosis) und der Strahlungsintensität bzw. Bestrahlungsstärke I von einem vereinfachten geometrischen Ansatz für das Strahlungsfeld des Strahlers ausgegangen. Anstelle des realen Volumenstrahlers wird stattdessen von einem Linienstrahler ausgegangen, dessen Licht radial nach außen abgestrahlt wird. Hierbei werden die Gesamtstrahlungsleistung des Volumenstrahlers und des Linienstrahlers als identisch angesetzt.

Zu einem vorgegebenen Abstand a zur Strahlerachse des Linienstrahlers gehört bei radialsymmetrischer Abstrahlung somit eine Mantelfläche M(a), die sich durch eine konstante Strahlungsintensität I(a) auszeichnet.

Die Größe der Mantelfläche berechnet sich zu:

$$(1) \quad M(a) \; [m^2] = 2 \times pi \times a \; [m] \times s \; [m],$$

wobei s die endliche Leuchtlänge des Strahlers kennzeichnet.

Somit ergibt sich die Strahlungsintensität I(a) im Abstand a zu:

$$(2) \quad I(a) \; [W/m^2] = W_0 \; [W] \; / \; M(a) \; [m^2]$$

mit $W_0$ als Gesamtstrahlungsleistung des Strahlers. Die Strahlungsintensität I(a) bezeichnet hierbei eine Flächenleistungsdichte oder wird synonym als Bestrahlungsstärke bezeichnet.

Sowohl $W_0$ als auch s sind dem technischen Informationsblatt des Lampenherstellers zum Strahler zu entnehmen. Oftmals ist nur der Wert der Strahlungsintensität an der Strahleroberfläche angegeben, d.h. die Gesamtstrahlungsleistung I (r) im Abstand r mit r als Radius des zylindrischen Querschnitts des realen Volumenstrahlers. Hieraus lässt sich für nachfolgende Berechnungen die Gesamtstrahlungsleistung $W_0$ berechnen zu:

$$(3) \quad W_0 \, [W] = I(r) \, [W/m^2] \times M(r) \, [m^2].$$

Mit r als Radius des zylindrischen Querschnitts des realen Volumenstrahlers resultiert die Strahlungsintensität nach dem vereinfachten Modellansatz zu:

$$(4) \quad I(d)[W/m^2] = W_0 \, [W] \, / \, M(d) \, [m^2],$$

wobei d nun den Abstand zur zugänglichen Strahleraußenfläche mit

$$(5) \quad a[m] = r[m] + d[m]$$

kennzeichnet. In der Praxis entspricht d dem Abstand zwischen der bestrahlten Oberfläche und der Strahleraußenkante.
Weiterhin berechnet sich die Bestrahlungsenergiedichte E im Abstand d somit zu:

$$(6) \quad E(d) \, [J/m^2] = I(d) \, [W/m^2] \times t[s],$$

wobei t [s] die Zeitdauer der Bestrahlung angibt. Die Bestrahlungsenergiedichte wird synonym auch als Bestrahlungsdosis bezeichnet.
Sofern die Arbeitsatmosphäre keine (V)UV-Strahlung absorbierenden Anteile enthält, kann die dargestellte Berechnung als gute Näherung verwendet werden. Dies gilt ebenso bei Inertgas-Atmosphären mit keiner bzw. vernachlässigbarer Absorption, z.B. unter Stickstoffatmosphäre.
Enthält die Arbeitsatmosphäre dagegen (V)UV-Strahlung absorbierende Anteile, so sind diese wellenlängenabhängig in der Berechnung über das Lambert-Beersche Gesetz zu berücksichtigen. Nach Lambert-Beer bestimmt sich die Strahlungsleistung Wabs (d, $\lambda$) beim Durchlaufen eines Gasvolumens der Dicke d zu:

$$(7) \quad W_{abs}(d,\lambda)[W] = W_0 \, [W] \times exp \, (-d[m]/(k_B[J/K] \times T[K]) \times \sigma(\lambda)[m^2] \times n[mol] \, / \, V[1/m^3] \times R[J/mol/K] \times T[K])$$

mit

- $W_0$ als Strahlerausgangsleistung,
- $k_B$ als Boltzmann-Konstante (1,3806488 x $10^{-23}$ J/K),
- T [K] als Temperatur (RT= 298 K (=25°C)),
- $\sigma(\lambda)[m^2]$ als wellenlängenabhängiger Absorptionsquerschnitt des betrachteten Gases,
- $n[mol]/V[m^3]$ als Stoffmenge bzw. Molekülanzahl des Gases pro Volumeneinheit,
- $R[J/mol/K]$ als universelle Gaskonstante (R = 8,314 J/mol/K).

Mit P als von außen technisch einfach messbarer Druck vereinfacht sich mit

$$(8) \quad P \, [N/m^2] = n[mol] \, / \, V[1/m^3] \times R[J/mol/K] \times T[K]$$

die Gleichung (7) zu

$$(9) \quad W_{abs}(d, \lambda)[W] = W0 \, [W] \times exp \, (-d[m]/(kB[J/K] \times T[K]) \times \sigma(\lambda)[m^2] \times P \, [N/m^2]).$$

Bei der Anwesenheit von mehreren Gasspezies einer Anzahl m in der Arbeitsatmosphäre sind entsprechend alle Gase mit ihrem wellenlängenabhängigen Absorptionsquerschnitt und ihrem Partialdruck zu berücksichtigen:

$$(10) \quad W_{abs}(d, \lambda)[W] = W_0\ [W] \times exp\ (-d[m]/(k_B[J/K] \times T[K]) \times (\sigma_1(\lambda)[m^2] \times P_1[N/m^2] + \sigma_2(\lambda)[m^2] \times P_2[N/m^2] + \ldots + \sigma_m(\lambda)[m^2] \times P_m[N/m^2])).$$

Um sowohl die Reduzierung der Strahlungsintensität durch die radiale Abnahme des Strahlungsfeldes als auch durch Absorption zu berücksichtigen ist in Gleichung (4) die Ausgangsstrahlerleistung $W_0$ durch die abstands- und wellenlängenabhängige Strahlungsleistung $W_{abs}$ (d, $\lambda$) nach Gleichung (10) zu ersetzen. Man erhält einen abstands- und wellenlängenabhängigen Ausdruck für die Strahlungsintensität:

$$(11) \quad I(d, \lambda)[W/m^2] = W_{abs}(d, \lambda)\ [W]\ /\ M(d)\ [m^2].$$

Weiterhin berechnet sich die Bestrahlungsenergiedichte E(d, $\lambda$) im Abstand d zu:

$$(12) \quad E(d, \lambda)\ [J/m^2] = I(d, \lambda)\ [W/m^2] \times t[s].$$

In der Realität wird handelt es sich bei den Strahlungsquellen jedoch um Volumenstrahler, so dass die Berechnung vor allem bei kleinen Abständen fehlerbehaftet ist. Die direkte Messung ist in der Praxis jedoch bei kleinen Abständen ebenso fehlerhaft, da verfügbare Sensoren über eine endliche, in der Regel ebene Sensorfläche verfügen und einen limitierenden Öffnungskegel aufweisen. Berechnungen mittels Ray-Tracing-Software können Volumenstrahler simulieren und es können genauere Bestrahlungsdosen angegeben werden. Entsprechende Software ist jedoch nicht jedermann und ständig verfügbar, so dass im Rahmen dieser Anmeldung ausschließlich die fehlerbehaftete, aber eindeutigen Angaben zur Bestrahlungsdosis gemäß des vereinfachten Ansatzes verwendet werden.

Der Fachmann hat diesen Umstand in der rechnerischen oder experimentellen Bestimmung seiner Bestrahlungsstärken und -dosen jeweils bezogen auf sein Rechnungsmodell oder Sensor zu berücksichtigen.

Mit einem winkellimitierten Sensor (Jenoptik AG) wurde bei verschiedenen Gasatmosphären die Abstandsabhängigkeit für einen Excimerstrahler (172 nm) bzw. für einen Hg-Niederdruckstrahler (185 nm) aufgenommen. Für den Hg-Niederdruckstrahler hat der Fachmann darauf zu achten, dass ausschließlich das VUV-Signal registriert wird. Ein Abgleich der theoretischen Messwerten bei Berechnung der Bestrahlungsenergiedichte gemäß Gleichung (11) findet unter Anpassung der Absorptionsquerschnitte derart statt, dass der qualitative Verlauf der Messwerte für Abstände größer 20 mm bestmöglich widergegeben wurde. Hieraus ergeben sich folgende Absorptionsquerschnitte für Luftsauerstoff:

$$\sigma\ (172\ nm) = 1{,}3 \times 10^{-23}\ m^2 = 1{,}3 \times 10^{-19}\ cm^2,$$

$$\sigma\ (185\ nm) = 2{,}18 \times 10^{-24}\ m^2 = 2{,}18 \times 10^{-20}\ cm^2,$$

Vereinfacht wird bei der Berechnung davon ausgegangen, dass die Absorptionsquerschnitte für Luftsauerstoff und Ozon, welches bei der VUV-Bestrahlung in Anwesenheit von Sauerstoff gebildet wird, identisch sind. In der Arbeitsatmosphäre befindlicher Wasserstoff oder Edelgase werden vernachlässigt.

Für das erfindungsgemäße Verfahren werden bevorzugt Strahlungsquellen mit eingeschränktem Emissionsspektrum, bevorzugt Strahlung mit einem ein Moden oder zwei Moden Emissionsspektrum, weiter bevorzugt Excimerlampen, Hg-Niederdruckstrahler und/oder LEDs eingesetzt. Dabei ist die Kombination von zwei oder mehreren identischen oder verschiedenen UV- oder VUV-Strahlungsquellen möglich.

Bevorzugt wird die Strahlungsstärke so gewählt, dass Prozesszeiten $\leq$ 1 Stunde, bevorzugt $\leq$ 10 Minuten realisierbar sind, wobei die erfindungsgemäße Bestrahlungsdosis einzuhalten ist.

Bevorzugt werden Silikonoberflächen für das erfindungsgemäße Verfahren (und auch für die erfindungsgemäßen Silikone) verwendet, die flach (d.h. ungekrümmt) oder lediglich leicht gekrümmt sind.

Das erfindungsgemäße Verfahren wird bevorzugt unter einer Prozessgasatmosphäre ausgeführt, ausgewählt aus normaler Luft, Stickstoff, Kohlendioxid und deren Mischungen, wobei im Falle von Stickstoff und Kohlendioxid und deren Mischungen stets ein definierter Sauerstoffgehalt von mindestens 0,1 Vol.-% vorhanden ist.

Das erfindungsgemäße Verfahren wird bevorzugt den Atmosphärendruck oder bei reduziertem Druck (Niederdruck) durchgeführt.

Es wird bevorzugt, dass die Prozesse bei definierter Luftfeuchtigkeit, bevorzugt einer Luftfeuchtigkeit von 20-80 %, weiter bevorzugt von 40-60 % durchgeführt werden.

Die Prozesse können bei Raumtemperatur durchgeführt werden, bevorzugt bei 15-25°C, weiter bevorzugt 18-22°C.

Für die Probentemperatur ist es bevorzugt, dass diese ≤ 70°C, weiter bevorzugt ≤ 50°C und besonders bevorzugt ≤ 40°C ist.

Im erfindungsgemäßen Verfahren kann die Bestrahlung statisch oder in Translation stattfinden. Im letzteren Falle ist es sowohl möglich, dass das Bestrahlungsmedium (z.B. die Lampe) oder das Bestrahlungssubstrat oder beides bewegt werden.

Die aufgeführten bevorzugten Verfahrensparameter können je nach Verfahrenserfordernissen gewählt werden, wobei Kombinationen der Verfahrensparameter miteinander möglich sind. Dadurch ist es möglich, das Verfahren auf die Herstellungs- und die Produkterfordernisse ideal anzupassen.

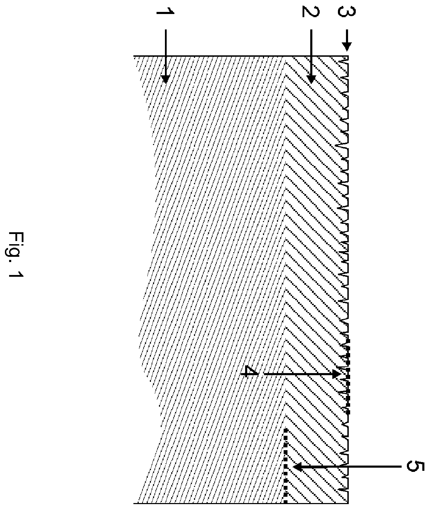

Die Fig. 1 stellt schematisch oberflächenmodifiziertes Silikon dar. Dabei bedeuten die Bezugszeichen:

- 1 Unmodifiziertes Silikon (Bulk)
- 2 Strahlungsmodifizierter Bereich (Silikon)
- 3 Rissstruktur in der strahlungsmodifizierten Silikonoberfläche
- 4 Vom unmodifizierten Silikon weggerichtete Oberfläche der Oberflächenmodifizierung
- 5 Zum unmodifizierten Silikon weisende Grenzfläche der Oberflächenmodifizierung

**Beispiele**

Beispiel 1: Herstellung von erfindungsgemäßem Silikongummi

Bestrahlung von Silikongummi der shore-Härte A 50 (Dow Corning® QP1-50 Liquid Silicone Rubber Kit). Größe der Muster 50mm x 25mm.

In Tab. 1 sind vier Prozessparametersätze aufgeführt, die für die Herstellung von vier erfindungsgemäßen Silikonen durch Strahlungsmodifizierung verwendet werden. Die mit den Prozessparametern erstellten Proben sind mit M1 bis M4 bezeichnet. Entsprechend sind auch die unter diesen Parametern Muster mit M1 bis M4 klassifiziert. Zur Abgrenzung werden synonym die Bezeichnungen "172 nm, milde Parameter" für M1, "172 nm, harte Parameter" für M2, "185 nm, milde Parameter" für M3 und "185 nm, harte Parameter" für M4 verwendet.

In Ergänzung hierzu sind in Tab. 1 alle relevanten Daten zu den verwendeten Strahlungsguellen aufgelistet sowie die hieraus berechneten Bestrahlungsdosen und Bestrahlungsstärken. Alle weiteren Beispiele basieren auf den vier genannten erfindungsgemäßen strahlungsmodifizierten Silikonoberflächen. Zusätzlich wird in den Beispielen Bezug auf unbestrahltes Silikongummi (aus diesem Beispiel) genommen, welches synonym auch als Referenz bezeichnet wird.

Tab. 1: Parameter für Proben M1-M4

| Parameter-satz | Strahlung-squelle | Wellen-länge | Leuch tlänge | Strahler-durchmesser | Leis-tungsdichte auf der Strahl-eroberfläche | Atmos-phäre | Atmosphären-druck | Ab-stand zur Lampe | Bestrahlungs-dauer | Bestrahl-ungsstärke | Bestrahl-ungsdosis |
|---|---|---|---|---|---|---|---|---|---|---|---|
| **M1 (172 nm, milde Pa-rameter)** | Xeradex - Exci-merstrahler XERADEX 100W/L40/375/ SB-Y/HV (Osram GmbH) | 172 nm | 375 mm | 40 mm | 40 mW/cm$^2$ | Luft (21% Sauerstoff) | 1013 mbar | 10 mm | 900 s | 13,6 mW/cm$^2$ | 12,3 J/cm$^2$ |
| **M2 (172 nm, harte Pa-rameter)** | Xeradex - Exci-merstrahler XERADEX 100W/L40/375/ SB-Y/HV (Osram GmbH) | 172 nm | 375 mm | 40 mm | 40 mW/cm$^2$ | Stickstoff (1% Sau-erstoff) | 1013 mbar | 10 mm | 1200 s | 25,8 mW/cm$^2$ | 31,0 J/cm$^2$ |
| **M3 (185 nm, milde Pa-rameter)** | Hg-Nieder-druckstrahler UVX 120 4C S 19/670 Co (UV Technik Spe-ziallampen Gm-bH) | 185 nm | 568 mm | 19 mm | 20 mW/cm$^2$ | Luft (21% Sauerstoff) | 1013 mbar | 10 mm | 900 s | 11,9 mW/cm$^2$ | 10,7 J/cm$^2$ |
| **M4 (185 nm, harte Pa-rameter)** | Hg-Nieder-druckstrahler UVX 120 4C S 19/670 Co (UV Technik Spe-ziallampen Gm-bH) | 185 nm | 568 mm | 19 mm | 20 mW/cm$^2$ | Stickstoff (1% Sau-erstoff) im Durchfluss | 1013 mbar | 5 mm | 1200 s | 16 mW/cm$^2$ | 19,1 J/cm$^2$ |

Beispiel 2: Reduzierte Schmutzanhaftung

Die Oberflächen der Silikongummi gemäß der vier Behandlungsvarianten M1 bis M4 sowie unbehandeltes Referenzmaterial (Ausgangsmaterial aus Beispiel 1) wurden mit verschiedenen Normschmutz (Lieferant KSL Staubtechnik GmbH) beaufschlagt (I: Polyamidfasern (3,3 dtex, 0,3 mm Länge, schwarz), II: Esstar 30 (natives Stärkeerzeugnis - $C_6H_{10}O_5$ ; mittl. Korngröße 30$\mu$m), III: Eskal 30 (Naturreines Calciumcarbonat-$CaCO_3$ (99%); mittl. Korngröße 30$\mu$m)).
Im ersten Schritt wurden die behandelten Oberflächen sowie die Referenz vollständig mit dem Normschmutz bedeckt. Im zweiten Schritt wurden die kontaminierten Muster manuell durch schnelle Auf- und Abbewegungen geschüttelt. Im dritten Schritt erfolgte ein Abblasen der Oberfläche mit Druckluft.
Auf den behandelten Silikonoberflächen werden mit Hilfe eines Mikroskops (VHX600, Keyence) Rissstrukturen sichtbar. Diese sind für die Varianten M2 und M4 (jeweils harte Prozessparametervarianten) stärker ausgeprägt als für die jeweils wellenlängen- zugehörigen Varianten M1 bzw. M3 bei reduzierter, d.h. milder Strahlungsleistung. Sowohl das Schütteln als auch das Abblasen stellen eine gewisse mechanische Belastung für die Silikonoberflächen dar, so dass zusätzliche Risse entstehen können.
Generell gilt, dass die Schmutzbelastung nach dem Ablasen mit Druckluft geringer ist als nach dem manuellen Abschütteln der Proben. Bei der Beaufschlagung mit Polyamidfasern zeigen die abgeschüttelten Oberflächen im Vergleich zur Referenz lediglich eine geringe Restkontamination. Die abgeblasenen erfindungsgemäßen Oberflächen M1 bis M4 zeigen dagegen keine Schmutzbelastung an während die unbehandelte Referenz weiterhin Polyamidfasern aufweist.
Bei der Beaufschlagung mit Stärke (Esstar 30) bzw. mit Calciumcarbonat (Eskal 30) lässt sich die Kontamination weder durch Schütteln noch durch Abblasen merklich von der unbehandelten Silikonoberfläche entfernen. Dagegen zeigen die abgeschüttelten erfindungsgemäßen Oberflächen im Vergleich zur Referenz lediglich eine geringe Restkontamination. Auf den abgeblasenen erfindungsgemäßen Silikonoberflächen ist keine Schmutzbelastung sichtbar.

Beispiel 3: Reduzierte Klebrigkeit

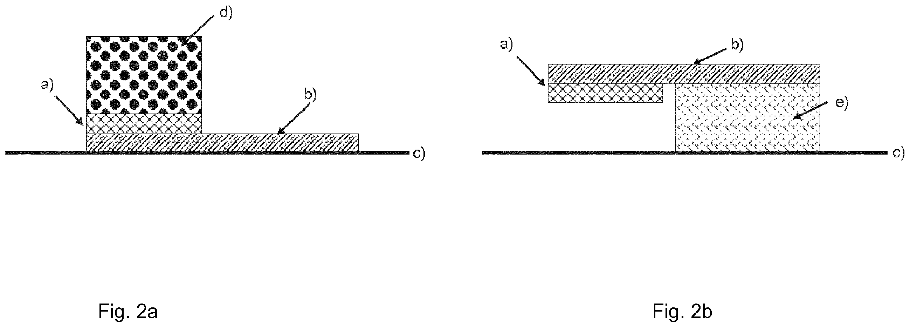

Die Oberflächen der Silikongummi (a) gemäß der vier Behandlungsvarianten sowie unbehandeltes Referenzmaterial wurden mit der behandelten Seite kopfüber auf ein horizontal flach liegendes, gereinigtes Glassubstrat (b) aufgelegt und mit einem Gewicht (d) von 4 kg beschwert (Belastungsphase Fig. 2a. Der Flächendruck betrug somit ca. 30 kPas. In einer ersten Untersuchungsreihe betrug die Belastungszeit 1 min, in einer zweiten 5 min und in einer dritten 24 h (lediglich Varianten M2 und M4). Nach Ablauf der vorgegebenen Belastungsdauer wurde das Gewicht entfernt, die Glasplatten mit dem Silikonmustern umgedreht und mit dem überstehendem Glas auf eine Halterung (e) gelegt, derart dass die Silikonmuster frei in der Luft hängen und nach unten frei abfallen konnten. Gemessen wurden die Zeiten, bis das Silikon sich vom Glassubstrat löst und abfällt (Ablösephase Fig. 2b). Tab. 2 gibt eine Übersicht über die so ermittelten Ablösezeiten.
Deutlich sichtbar ist die Reduzierung der Silikonanhaftung durch die VUV-Behandlung.
Tab. 2: Übersicht der Belastungszeiten und Ablösezeiten zur Demonstration der reduzierten Oberflächenklebrigkeit nach VUV-Strahlungsbehandlung. "x" kennzeichnet eine Messung, bei der das Silikonmuster sich bereits während des Umdrehens vom Glasträger gelöst hat.

| Prozessparameter | Belastungsdauer | Ablösezeiten | Belastungsdauer | Ablösezeiten | Belastungsdauer | Ablösezeiten |
|---|---|---|---|---|---|---|
| Unbehandelte Referenz | 1min | 23min | 5min | >24h<br>>24h<br>>24h<br>>24h<br>>24h | 24h | >24h |
| M1 (172nm, mild) | 1min | 98s<br>x<br>x<br>x<br>1s | 5min | 93s<br>3s<br>38min<br>16min<br>220s | | |
| VUV-Variante M2 (172nm, hart) | 1min | x<br>x<br>X<br>X<br>X | 5min | x<br>X<br>X<br>X<br>X | 24h | x |
| M3 (185nm, mild) | 1min | 1s<br>x<br>x<br>x<br>x | 5min | 5min<br>165s<br>7min<br>160s<br>2s | | |
| M4 (185nm, hart) | 1min | x<br>x<br>X<br>X<br>X | 5min | x<br>X<br>X<br>X<br>X | 24h | x |

Beispiel 4: Rissstrukturen

Nach Strahlungsbehandlung und mindestens 20% unidirektionaler Dehnung zeigen sämtliche strahlungsbehandelten (Behandlungsvarianten M1 bis M4 aus Beispiel 1) Oberflächen Rissstrukturen mit Zählraten von > 2/mm. Dies ist per Lichtmikroskopie feststellbar Das unbehandelte Ausgangsmaterial aus Beispiel 1 zeigte dagegen nach der Dehnung keine Risse. Gemessen wurde mittels Lichtmikroskop der FA. Keyence, Gerät: VHX600 in der Aufsicht.

Beispiel 5: Risstiefe

Das strahlungsmodifizierte Silikon (Bereich 2, Abb. 1) hat im Bereich der Modifikation eine höhere Dichte als das Volumenmaterial (Bereich 1, Abb. 1). Aufgrund der hohen Eindringtiefen der (V)UV Strahlung von bis zu mehreren Mikrometern entsteht eine Verspannung in der oberflächennahen Schicht. Durch geringen Energieeintrag (z.B. durch Erwärmung während der Behandlung, mechanische Last) reißt bei dem erfindungsgemäß hergestellten Silikongummi spätestens unter Dehnungsbelastung die Oberfläche ein (vgl. hierzu auch Beispiel 4). Die Tiefe der Risse beträgt hierbei regelmäßig mindestens 2 $\mu$m und lässt sich gut mittels Lichtmikroskopie oder hochauflösender Rasterelektronenmikroskopie (HREM) an Querschnitten feststellen. Dies gilt auch für die Behandlungsvarianten M1 bis M4 aus dem Beispiel 1. Im Gegensatz hierzu lassen sich - wie bereits in Beispiel 4 beschrieben - bei unbehandeltem Silikongummi (auch Ausgangsmaterial aus Beispiel 1) keine Risse und somit auch keine Risstiefen feststellen.

Beispiel 6: Tiefenprofil (ToF-SIMS)

Eine Probe der Behandlungsvariante M1 aus Beispiel 1 wurde in einer ToF-SIMS Tiefenprofiluntersuchung untersucht. Messprinzip: Beim Beschuss eines Festkörpers mit Ionen hinreichender Energie werden von der Oberfläche u.a. positiv und negativ geladene Sekundärionen emittiert. Die Massenanalyse dieser Sekundärionen in einem Flugzeit-Massenspektrometer bildet die Grundlage des ToF-SIMS-Verfahrens. Mit der Sekundärionenmassenspektrometrie lassen sich prinzipiell alle Elemente nachweisen. Die hohe Nachweisempfindlichkeit des ToF-SIMS-Verfahrens ermöglicht selbst die Erfassung von Spurenelementen mit Konzentrationen bis in den ppm-Bereich. Aufgrund der ausgeprägten Abhängigkeit der Sekundärionenemission von der jeweiligen Umgebung des Emissionsortes (Matrixeffekt) erlauben die Intensitäten der Sekundärionensignale jedoch keine direkten Rückschlüsse auf die quantitative Zusammensetzung der einzelnen Bestandteile. Im dynamischen Betrieb ist durch die Erhöhung der Primärionenstromdichte ein sukzessiver Abtrag des Probenmaterials möglich. Durch quasi-simultanen Probenabtrag und Spektrenaufnahme lassen sich so Tiefenverteilungen von Sekundärionen mit einer Tiefenauflösung bis zu 1 nm darstellen.
Messparameter Tiefenprofilanalyse: Sputtern: Cs-Flüssigmetallionenquelle, Cs+, 3 keV, 150 x 150 $\mu$m. Analyse: Anregung mit einer 25 keV Bi-Flüssigmetallionenquelle, Bunched mode, Analysefläche 50 x 50 $\mu$m im Zentrum des Sputterkraters, Ladungskompensation mit gepulster Elektronenquelle, Tiefenprofil im Modus "non-interlaced" mit je 1,0s Sputterzeit, 0,5 s Pause zur Ladungskompensation. Der gemessene Sputterstrom betrug 24,6 nA. Die Sputterzeit betrug 8000 s.
Bei einer Normierung des Tiefenprofils auf das Kohlenstoffsignal zeigte sich oberflächennah ein erhöhtes Zählratenverhältnis O/C. Dieses nahm während der ersten Tausend Sputtersekunden deutlich ab, während nach 2000 Sputtersekunden keine weitere Veränderung des Verhältnisses im Rahmen der Messgenauigkeit ausmachbar war. Daher wird davon ausgegangen, dass nach 2000 Sputtersekunden das Bulkmaterial erreicht war, das bedeutet, das unveränderte Ausgangsmaterial aus Beispiel 1 (Bereich 1, Abb. 1). Der Materialabtrag pro Sputtersekunde wurde u.a. durch Vermessung der Sputterkratertiefe der gemessenen Probe per konfokaler Mikroskopie bestimmt. In diesem Beispiel entsprechen 1000 Sputtersekunden eine Tiefe von 1 $\mu$m. Im vorliegenden Fall beträgt also die Modifikationstiefe bzgl. des erhöhten O/C-Zählratenverhältnisses etwa 2 $\mu$m.

Beispiel 7: Elementzusammensetzunq an der Oberfläche, gemessen mittels XPS

Messprinzip: Die Röntgenphotoelektronenspektroskopie (XPS) beruht auf dem äußeren Photoeffekt, bei dem durch Röntgenstrahlung Photoelektronen aus einer Festkörperoberfläche ausgelöst werden. Die Bestimmung der kinetischen Energie dieser Elektronen erlaubt Rückschlüsse auf die chemische Zusammensetzung und die elektronische Beschaffenheit der untersuchten Probenoberfläche. Die Analyse ist oberflächenempfindlich.
Die zugehörige Informationstiefe, die durch die begrenzte Austrittstiefe der emittierten Elektronen bestimmt wird, beträgt ca. 10 nm. Die Methode erlaubt eine quantitative Bestimmung der chemischen Zusammensetzung des oberflächennahen Bereiches. Dabei werden alle Elemente mit Ausnahme von Wasserstoff und Helium erfasst. Zur Kompensation von Aufladungseffekten wird die C1s-Hauptemissionslinie bei der Auswertung auf eine Bindungsenergie von 285 eV festgelegt, so dass sich die Lagen der Bindungsenergien der übrigen Photolinien entsprechend verschieben. Die Nachweisempfindlichkeit der Methode ist elementspezifisch und liegt bei ca. 0.1 at.-%, d.h. ca. 1000 ppm.

Messparameter: Die XPS-Untersuchungen erfolgten mit einem VG 220i-XL-System. Parameter: Magnetlinsenmode, Abnahmewinkel der Photoelektronen 0°, monochromatisierte $Al_{K\alpha}$-Anregung, Constant Analyser Energy-Mode (CAE) mit 70 eV Passenergie in Übersichtsspektren sowie 20 eV in energetisch hochaufgelösten Linienspektren, Analysenfläche: 0,65 mm Ø, die Neutralisation von elektrisch nichtleitenden Proben erfolgt mit niederenergetischen Elektronen (4 eV).

Mittels XPS wurde die Elementzusammensetzung der strahlungsmodifizierten Silikonoberfläche (Bereich 4, Abb. 1) gemäß der vier Behandlungsvarianten laut Behandlungsparameter M1 bis M4 (Tab.1) aus Beispiel 1 und das unbehandelte Silikon (Ausgangsmaterial aus Beispiel 1) bestimmt. Die in der Tab. 3 angegebenen Prozentzahlen sind jeweils bezogen auf die Gesamtzahl aller in der Oberfläche enthaltenen C, Si und O Atome, die mittels XPS gemessen wurden. Hierbei zählt zur Oberfläche der Tiefenbereich, der mit der durchgeführten XPS-Messung erfasst wurde (typischerweise ca. 10 nm).

Tab. 3: XPS-Ergebnisse zur Elementzusammensetzung der strahlungsbehandelten Silikonmuster M1 bis M4 und einer unbehandelten Silikonprobe

| Element | Si 2p Konz. / at.-% | O 1s Konz. / at.-% | C 1s Konz. / at.-% |
|---|---|---|---|
| **Unbehandeltes Silikon** | 25 | 29 | 46 |
| M1 (172nm mild) | 26 | 52 | 22 |
| M2 (172nm hart) | 28 | 62 | 10 |
| M3 (185nm mild) | 25 | 52 | 23 |
| M4 (185nm hart) | 25 | 57 | 18 |

Beispiel 8: Rauheit

Die Messung erfolgte mittels konfokaler Lichtmikroskopie (Gerät: PLU neox der FA. Sensofar), mit 100x Objektiv, Messstrecke: 50 µm. Die Messung erfolgte an unbehandelten und nach Beispiel 1 behandelten Silikonen (Proben M1-M4). Diese wurden 20% unidirektional gedehnt. Die Auswertung erfolgte im Zwischenrissbereich (rissfreier Bereich), d.h. bei Auftreten von Rissstrukturen in einem Messbereich ohne Risse, und in Anlehnung an DIN EN ISO 4287 unter Anwendung eines Gaußfilters der Grenzwellenlänge 10 µm.

Tab. 4: Rauheitsmessung in den Zwischenrissbereichen mittels konfokaler Lichtmikroskopie an unbehandelten und modifizierten Silikongummiproben, Messstrecke: 50 µm, Mittelung über 5 Messungen.

| | Rz /µm) | Standardabweichung ∆Rz /µm |
|---|---|---|
| **unbehandeltes Silikon** | 0,09 | 0,02 |
| M1 (172nm mild) | 0,04 | 0,02 |
| M2 (172nm hart) | 0,02 | 0,01 |
| M3 (185nm mild) | 0,03 | 0,01 |
| M4 (185nm hart) | 0,04 | 0,01 |

Tab. 5: Rauheitsmessung in den rissfreien Bereichen mittels konfokaler Lichtmikroskopie an unbehandelten und modifizierten Silikongummiproben nach unidirektionaler Dehnung um 20%, Messstrecke: 50µm, Mittelung über 5 Messungen.

| | Rz /µm) | Standardabweichung ∆Rz /µm) |
|---|---|---|
| **unbehandeltes Silikon** | 0,09 | 0,02 |
| M1 (172nm mild) | 0,04 | 0,01 |
| M2 (172nm hart) | 0,02 | 0,01 |
| M3 (185nm mild) | 0,05 | 0,02 |
| M4 (185nm hart) | 0,05 | 0,01 |

Hieraus ergibt sich, dass die mittlere Rautiefe (Rz) der im rissfreien Bereich der Silikonoberfläche der Proben M1-M4 durch Dehnung innerhalb des Messfehlers praktisch nicht verändert wird. Dagegen ist allerdings die mittlere Rautiefe Rz gegenüber der unbehandelten Referenz (Ausgangsmaterial aus Beispiel 1) deutlich herabgesetzt.

Beispiel 9: Nanohärtemessung

Die Nanoindentierung wurde wie oben im Text beschrieben beispielhaft für die strahlungsmodifizierten Silikonoberfläche (Bereich 4, Abb. 1) gemäß der zwei Behandlungsvarianten laut Behandlungsparameter M3 und M4 (Tab. 1) aus Beispiel 1 und für das unbehandelte Silikon durchgeführt. Zur besseren Vergleichbarkeit wurden die Messungen bei einer Kontakttiefe (Eindringtiefe) von 100 nm $\pm$ 10 nm ausgewertet.

Tabelle 6: Nanoindentierung: Auswertung der untersuchten Proben mit Driftkorrektur, einheitliche Kraftrate 0,07 mN/s, max. Kraft 0,055 mN (Substrat: 2 mm dicke Silikonreferenz mit 50 Shore-A: Härte= 0,48 $\pm$ 0,06 MPa, E-Mod. = 4,8 $\pm$ 3,5 MPa bei Kraftrate 0,5 mN/s, max. Kraft 1 mN), Werte bei angegebener Kontakttiefe.

| | Bei 100 nm $\pm$ 10 nm Kontakttiefe | |
|---|---|---|
| Probe | Härte [MPa] | E-Mod. [MPa] |
| M3 (185 nm mild) | 40 $\pm$ 1 | 152 $\pm$ 9 |
| M4 (185 nm hart) | 220 $\pm$ 27 | 634 $\pm$ 47 |

Es zeigt sich, dass bei den erfindungsgemäß hergestellten Silikonen oberflächennah mindestens um eine Größenordnung die Härte und um mindestens Faktor 3 der E-Modul gegenüber der Referenz (Ausgangsmaterial aus Beispiel 1) erhöht ist.

Beispiel 10: Gleitreibung

Die strahlungsmodifizierte Oberflächenschicht der Silikone zeigt ein verändertes Gleitreibungsverhalten im Vergleich zum unbehandelten Material.

Die erfindungsgemäßen Proben M1 bis M4 (Beispiel 1) sowie eine unbehandelte Silikonoberfläche wurden mit einer Kraft von 2 N bei einer Geschwindigkeit von 200 mm/s, Hub 1 mm getestet. Bevor Messung startet, erfolgt ein sogenannter Preload-Schritt, um die Kraft zu erreichen. Gegenkörper zum Testen war eine Stahlkugel mit einem Durchmesser von 10 mm. Es wurde trocken, also ohne Öl/Fett gemessen. Die Ergebnisse sind in der Tabelle 7 zusammengefasst.

Tab. 7: Tribometrie

| | Reibungskoeffizient | Fehler Reibungskoeffizient |
|---|---|---|
| **unbehandeltes Silikon** | 1,7 | 0,6 |
| M1 (172nm mild) | 1,1 | 0,2 |
| M2 (172nm hart) | 0,7 | 0,1 |
| M3 (185nm mild) | 0,5 | 0,1 |
| M4 (185nm hart) | 0,3 | 0,1 |

**Patentansprüche**

1. Verfahren zum Herstellen eines Silikons mit strahlungserzeugter Oberflächenmodifikation (2), wobei die Oberflächenmodifikation (2) ein Bereich mit gegenüber dem unmodifizierten Silikon (1) veränderter stofflicher Zusammensetzung ist und zumindest nach 20 % unidirektionaler Dehnung über eine Rissstruktur (3) mit Rissen einer Tiefe 2-30 $\mu$m, bevorzugt 2- 15 $\mu$m verfügt, umfassend die Schritte:

    a) Bereitstellen eines Silikons
    b) Modifizieren der Oberfläche des Silikons in Gegenwart von Sauerstoff einer Konzentration von 0,1 - 100 Vol.-%, bevorzugt 1-21 Vol.-% mit Licht einer Wellenlänge $\leq$ 225 nm wobei eine Bestrahlungsdosis von 10 J/cm$^2$ - 50 J/cm$^2$ eingesetzt wird.

**Claims**

**1.** Process for producing a silicone with radiation-generated surface modification (2), wherein the surface modification (2) is a region with altered physical composition compared to the unmodified silicone (1) and, at least after 20% unidirectional expansion, has a fissure structure (3) having fissures of depth 2-30 $\mu$m, preferably 2-15 $\mu$m, comprising the steps of:

a) providing a silicone
b) modifying the surface of the silicone in the presence of oxygen at a concentration of 0.1-100% by volume, preferably 1-21% by volume, with light of wavelength $\leq$ 225 nm, using a radiation dose of 10 J/cm$^2$-50 J/cm$^2$.

**Revendications**

**1.** Procédé de fabrication d'un silicone avec une modification de surface (2) générée par rayonnement, dans lequel la modification de surface (2) est une zone avec une composition de matière modifiée par rapport au silicone non modifié (1) et dispose, au moins, après 20 % de dilation unidirectionnelle, d'une structure de fissure (3) avec des fissures d'une profondeur de 2-30 $\mu$m, de manière préférée de 2-15 $\mu$m, comprenant les étapes :

a) de mise à disposition d'un silicone
b) de modification de la surface du silicone en présence d'oxygène en une concentration de 0,1 - 100 % vol., de manière préférée de 1 - 21 % vol. avec de la lumière d'une longueur d'onde $\leq$ 225 nm, dans lequel une dose de rayonnement de 10 J/cm$^2$ - 50 J/cm$^2$ est employée.

Fig. 1

Fig. 2a

Fig. 2b

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 112012001495T5
- DE 102009058910 A1
- DE 102009005239 A1
- DE 102008026719 A1
- DE 102005041330 B4
- DE 000010256483 A1
- DE 102009046947 A1
- DE 102007020655 A1
- WO 002012013364 A1
- DE 102009019745 A1

**In der Beschreibung aufgeführte Nicht-Patentliteratur**

- **M. MORRA ; E. OCCHIELLO ; R. MAROLA ; F. GARBASSI ; P. HUMPHREY ; D. JOHNSON.** *J. Coll. Interface Sci.,* 1990, vol. 137, 11-24
- **SCHNYDER, B. ; LIPPERT, T. ; KÖTZ, R. ; WOKAUN, A. ; GRAUBNER, V.-M. ; NUYKEN, O.** *Surface Science,* 2003, 532-535
- **MIRLEY, C. L ; KOBERSTEIN, J. T.** *Langmuir,* 1995, vol. 11, 1049
- **AWAZU, K. ; ONUKI, H.** *Appl. Phys. Lett.,* 1996, vol. 69, 482
- **BERDICHEVSKY, Y. ; KHANDURINA, J. ; GUTTMAN, A. ; LOA, Y.-A.** *Sensors and Actuators,* 2004, vol. 97, 402
- **GRAUBNER, V.-M.** *Dissertation,* 2004
- **ICHIKAWA, S.** *J. Appl. Phys.,* 2006, vol. 100, 33510
- **BERDICHEVSKY, Y. ; KHANDURINA, J. ; GUTTMAN, A. ; LOA, Y.-A.** *Sensors and Actuators,* 2004, 97
- **DÖLLE, C. ; PAPMAYER, M. ; OTT, M. ; VISSING, K.** *Langmuir,* 2009, vol. 25, 7129
- **GRAUBNER, V. M ; CLEMENS, D.** *Langmuir,* 2005, vol. 21, 8940
- **GRAUBNER, V.-M. ; JORDAN, R. ; NUYKEN, O.** *Macromolecules,* 2004, vol. 37, 5936
- **W.C. OLIVER ; G.M. PHARR.** An improved technique for determining hardness and elastic modulus using load and displacement sensing indentation experiments. *J. Material Res.,* 1992, vol. 7 (6), 1564-1583
- **K. I. SCHIFFMANN ; R. L.A. KÜSTER.** Comparison of Hardness and Young's Modulus by Single Indentation and Multiple Unloading Indentation. *Zeitschrift für Metallkunde,* 2004, vol. 95 (5), 311-316
- **K. W. MCELHANEY ; J. J. VLASSAK ; W. D. NIX.** Determination of indenter tip geometry and indentation contact area of depth-sensing indentation experiments. *J. Mater. Res.,* 1998, vol. 13, 1300-1306
- **W. D. NIX ; H. GAO.** Indentation on size effects in crystalline materials: a law for strain gradient plasticity. *J. Mech. Phys. Solids,* 1998, vol. 46, 411-425
- **X.-L. GAO.** An expanding cavity model incorporating strain-hardening and indentation size effects. *International Journal of Solids and Structures,* 2006, vol. 43, 6615-6629